# EUROPÄISCHE PATENTSCHRIFT

(11) **EP 3 542 987 B1**
(45) Veröffentlichungstag und Bekanntmachung des Hinweises auf die Patenterteilung: **03.11.2021**
(21) Anmeldenummer: 18211217.7
(22) Anmeldetag: 10.12.2018
(51) Int. Cl.: B29C 49/58, B29C 49/46, B29C 49/06, B29C 49/12, B29L 31/00

(54) **VORRICHTUNG ZUM EXPANDIEREN VON KUNSTSTOFFBEHÄLTNISSEN MIT ABSPERRVENTIL ZWISCHEN DRUCKERZEUGUNGSEINRICHTUNG UND EINFÜLLEINRICHTUNG**
DEVICE FOR EXPANSION OF PLASTIC CONTAINERS WITH STOP VALVE BETWEEN PRESSURE GENERATING DEVICE AND FILLING DEVICE
DISPOSITIF D'EXPANSION DE RÉCIPIENTS EN MATIÈRE PLASTIQUE À SOUPAPE D'ARRÊT ENTRE LE DISPOSITIF DE PRODUCTION DE PRESSION ET LE DISPOSITIF DE REMPLISSAGE

(30) Priorität: 22.03.2018 DE 102018106779
(43) Veröffentlichungstag der Anmeldung: 25.09.2019
(73) Patentinhaber: Krones AG, 93073 Neutraubling (DE)
(72) Erfinder: Vornehm, Andreas, 93073 Neutraubling (DE); Finger, Dieter, 93073 Neutraubling (DE); Kitzinger, Thomas, 93073 Neutraubling (DE); Meier, Dominik, 93073 Neutraubling (DE); Betz, Christian, 93073 Neutraubling (DE); Hanesch, Cora, 93073 Neutraubling (DE); Pense, Andreas, 93073 Neutraubling (DE)
(74) Vertreter: Bittner, Bernhard

(56) Entgegenhaltungen:
- US-A1- 2012 315 350
- US-A1- 2013 113 143
- US-A1- 2017 225 934
- US-A1- 2017 291 345

## Beschreibung

Die vorliegende Erfindung bezieht sich auf eine Vorrichtung und ein Verfahren zum Expandieren von Kunststoffvorformlingen zu Kunststoffbehältnissen. Derartige Vorrichtungen und Verfahren sind aus dem Stand der Technik seit Langem bekannt. Die Dokumente US2017/291345A1, US2012/315350A1 und US2017/225934A1 beschreiben Vorrichtungen und Verfahren zum Expandieren von Kunststoffvorformlingen zu Kunststoffbehältnisse gemäß dem Stand der Technik.

Üblicherweise werden dabei zunächst erwärmte Kunststoffvorformlinge mit Druckluft expandiert und anschließend die so gefertigten Flaschen mit einem Produkt befüllt. In jüngerer Zeit sind jedoch auch Vorgehensweisen bekannt geworden, bei denen nicht zuerst die Kunststoffvorformlinge mit Druckluft expandiert werden, sondern bei denen die Kunststoffvorformlinge direkt mit einem flüssigen Medium, insbesondere dem abzufüllenden Produkt befüllt werden.

Beim Formen von Behältnissen bzw. Flaschen mit Füllgut tritt jedoch die Problematik auf, dass mehr Füllgut zum Formen verwendet werden muss als später wirklich im Behälter bleiben wird. Daher muss Gas in den sogenannten Kopfraum der Behältnisse gelangen, um einen sogenannten Füllspiegel (Kante zwischen Füllgut und Kopfraumgas) einzustellen. Je nach technischer Notwendigkeit können unterschiedliche bzw. verschiedene Füllspiegel notwendig sein. Somit sollte eine Verstellbarkeit bei gleichzeitiger Reproduzierbarkeit des jeweiligen Füllspiegels gewährleistet werden.

Zum Formen der Behältnisse mit einem flüssigen Medium, welches anschließend im Behältnis verbleibt, wird im Stand der Technik eine Formeinheit verwendet, welche sich grob aus zwei Baugruppen zusammensetzt. Diese Baugruppen werden durch einen Füllzylinder und einen Füllkopf definiert. Der Füllzylinder kann bisher einfachwirkend ausgeführt sein und wird über eine Versorgungsleitung von einem zentralen Flüssigkeitsspeicher mit dem flüssigen Medium versorgt.

Die Zuleitung zwischen dem zentralen Flüssigkeitsspeicher und dem Füllzylinder kann durch eine Sperrvorrichtung abgesperrt werden. Ist der Füllzylinder gefüllt, wird die Sperrvorrichtung geschlossen und der Durchfluss gesperrt. Beim Formprozess wird das flüssige Produkt aus dem Füllzylinder in den Füllkopf gepresst. Die Verbindung zwischen Füllzylinder und Füllkopf ist mit mindestens einem Kanal ausgeführt.

Der Durchfluss vom Füllzylinder zum Füllkopf ist zu jederzeit möglich. Der Füllkopf setzt vor dem Formprozess auf der Form auf und dichtet die Schnittstelle zum Preform ab. Der Füllkopf ist durch einen Dichtstopfen dicht verschlossen. Nach dem Einstellen eines Vordrucks im Füllkopf wird der Dichtstopfen geöffnet. Mit diesem Schritt beginnt der Umformprozess, wobei der Preform unter Einwirkung des flüssigen Mediums und der Reckstange zu einem Behälter umgeformt wird.

Dieses aus dem Stand der Technik bekannte Verfahren hat jedoch einige Nachteile.

Aufgrund der Ausbildung des Preforms als Hohlkörper, befindet sich in diesem vor jedem Formvorgang ein bestimmtes Gasvolumen. Beim Einströmen der Flüssigkeit steigt dieses Gasvolumen aufgrund der Dichteverhältnisse in den Füllkopf auf. Da die Verbindung zwischen dem Füllkopf und dem Füllzylinder nicht absperrbar ausgeführt ist, steigt ein Teil des Gasvolumens ungehindert in den Füllzylinder.

Bei fortschreitendem Prozess vergrößert sich das Gasvolumen im Zylinder. Da die Kolbenstellung und der Kolbenhub im Zylinder über alle Zyklen hinweg konstant bleiben, sinkt nach einigen Füllzyklen das Volumen des flüssigen Mediums im Füllzylinder ab, wobei das Gasvolumen zunimmt. Durch diesen Effekt weicht das Füllvolumen des Behälters vom Sollzustand ab und der geformte Behälter ist Ausschuss.

Daneben wird der Druckverlauf im Prozess durch den Verfahrweg des Kolbens kontrolliert. Da Gase kompressible Medien sind, kann bei gleichem Verfahrweg des Kolbens kein reproduzierbarer Druckaufbau, bzw. Druckverlauf sichergestellt werden. Für die Formgebung des Behälters ist allerdings ein definierter Druckverlauf im Behälter nötig. Die Druckschwankungen führen wiederum zu einer schlechten Behälterqualität und somit zu Ausschuss.

Da während der Druckhaltezeit, welche für ein genaues Ausformen des Behälters benötigt wird, der Behälterdruck durch die Druckerzeugungseinrichtung permanent aufrechterhalten werden muss, verlängert sich die Dauer bis zum Füllen des Füllzylinders für den nächsten Zyklus um die Druckhaltezeit. Diese Zeitspanne führt so zu einer Verlängerung der Zykluszeit. Dies führt zu einer verringerten Ausstoßleistung und somit zu Produktivitätseinbußen für den Verwender.

Der vorliegenden Erfindung liegt daher die Aufgabe zugrunde, eine Vorrichtung und ein Verfahren zur Verfügung zu stellen, welches die oben genannten Probleme beseitigt, sodass eine Vorrichtung angeboten wird, welche es ermöglicht über alle Füllzyklen hinweg ein konstantes Abfüllniveau zu halten, bei möglichst kurzer Abfülldauer. Diese Aufgaben werden erfindungsgemäß durch die Gegenstände der unabhängigen Patentansprüche erreicht. Vorteilhafte Ausführungsformen und Weiterbildungen sind Gegenstand der Unteransprüche.

Eine erfindungsgemäße Vorrichtung zum Expandieren von Kunststoffvorformlingen zu Kunststoffbehältnissen mittels eines flüssigen Mediums, weist wenigstens eine Umformungsstation auf, welche die Kunststoffvorformlinge mit dem flüssigen Medium befüllt und expandiert. Weiterhin weist die Vorrichtung wenigstens eine Druckerzeugungseinrichtung auf, welche dazu geeignet und bestimmt ist, das flüssige Medium wenigstens einer Einfülleinrichtung zuzuführen. Diese Einfülleinrichtung befüllt die Kunststoffbehältnisse mit dem flüssigen Medium. Die Druckerzeugungseinrichtung weist dabei einen Druckausgang auf, der wenigstens zeitweise in Strömungsverbindung mit dem zu befüllenden Kunststoffvorformling bringbar ist.

Erfindungsgemäß ist in zumindest einem Verbindungskanal zwischen der Druckerzeugungseinrichtung und der Einfüllrichtung, innerhalb welchem das flüssige Medium geleitet wird, zumindest eine Absperreinrichtung eingebaut. Diese Absperreinrichtung ist dazu eingerichtet und dafür vorgesehen, dass ein Fluidweg innerhalb des Verbindungkanals zumindest teilweise unterbrechbar ist, insbesondere sodass die Einfülleinrichtung und/oder die Druckerzeugungseinrichtung entgasbar sind.

Zum Beispiel sind die Einfülleinrichtung und die Druckerzeugungseinrichtung unabhängig voneinander entgasbar.

Bei der Absperreinrichtung kann es sich um ein steuer- und/oder regelbares Ventil handeln. Beispielsweise kann die Absperreinrichtung derart gesteuert- und/oder geregelt sein, dass eine Druckerzeugung zwischen der Einfülleinrichtung und der Druckerzeugungseinrichtung gezielt eingestellt, insbesondere geregelt, werden kann. Zum Beispiel ersetzt eine solche geregelte Absperreinrichtung eine ansonsten separat verbaute Druckregelvorrichtung, beispielsweise in einem Füllkopf der Einfülleinrichtung. Es ist dann zum Beispiel denkbar, dass auf einen "Dichtstopfen im Füllkopf verzichtet werden kann. Bei dem Dichtstopfen kann es sich um das im Füllkopf verbaute Abdichtelement zur Vordruckerzeugung handeln. Mit einer derart geregelten Absperreinrichtung kann auch die Prozessteuerung zumindest teilweise übernommen werden.

Zum Beispiel erfolgt nach dem Schließen der Absperreinrichtung insbesondere kein weiterer Druckaufbau mehr. Der Füllkopf ist beispielsweise entkoppelt von der eigentlichen Druckerzeugungseinrichtung.
Dabei wird nach Abschluss des Füllvorgangs die Absperreinrichtung vorzugsweise vollständig geschlossen, sodass im Anschluss daran die Druckerzeugungseinrichtung wieder für einen neuen Füllvorgang befüllt werden kann.

Bevorzugt handelt es sich bei dem fließfähigen Medium um die abzufüllende Flüssigkeit. Bei dieser Flüssigkeit kann es sich um "leichtfließende" Flüssigkeiten wie Wasser, Säfte, Milch, Biere oder Weine handeln. Bei der Flüssigkeit kann es sich jedoch auch um zähfließende Flüssigkeiten wie Saucen, Öle oder ähnliches halten. Daneben kann es sich bei der abzufüllenden Flüssigkeit sowohl um karbonisierte Flüssigkeiten als auch um nicht karbonisierte Flüssigkeiten handeln. Insbesondere kann das fließfähige Medium von einem Gas, zum Beispiel von Stickstoff, verschieden sein.

Es wird darauf hingewiesen, dass die Begriffe Kunststoffbehältnis und Kunststoffvorformling teilweise synonym verwendet werden. Dies beruht darauf, dass der Kunststoffvorformling durch den hier beschriebenen Umformungsvorgang zu dem Kunststoffbehältnis umgeformt wird und daher während des Einfüllvorgangs nicht zu allen Zeitpunkten eindeutig von einem Kunststoffvorformling oder einem Kunststoffbehältnis gesprochen werden kann.

Bevorzugt handelt es sich bei den zu expandierenden und zu befüllenden Kunststoffbehältnissen um Behältnisse, welche aus einem Material hergestellt sind, welches aus einer Gruppe von Materialien ausgewählt ist, welche PET, HDPE, PP und dergleichen enthält. Bevorzugt handelt es sich bei den zu expandierenden und befüllenden Behältnissen um Flaschen.

Vorteilhaft handelt es sich bei dem fließförmigen Medium um ein flüssiges Medium und bevorzugt um das Füllgut.

Durch die Absperrvorrichtung im Verbindungskanal, zwischen der Druckerzeugungseinrichtung und der Einfüllrichtung (insbesondere zwischen dem Füllzylinder und dem Füllkopf), kann das Fluidverhalten in beiden Baugruppen entkoppelt werden.

Dadurch kann der Rückfluss des Gases aus dem Füllkopf in die Druckerzeugungseinrichtung verhindert werden. Am Beispiel des Füllkopfs kann unabhängig vom Zustand der Druckerzeugungseinrichtung mithilfe der Entgasungsanlage entgast werden.

Durch die Entgasungsanlage, welche vorzugsweise den höchsten Punkt des fluidführenden Systems kennzeichnet, kann das Druckerzeugungssystem entgast werden.

Die Entgasung des Systems führt zu einer reproduzierbaren Volumenabgabe in den Preform und steigert so die Prozesssicherheit.

Des Weiteren kann durch die Erfindung sichergestellt werden, dass bei einem gleichbleibenden Kolbenverfahrweg ein reproduzierbarer Druckaufbau stattfindet. Damit ist sichergestellt, dass der Behälter mit reproduzierbarer Qualität ausgeformt wird. Dadurch lässt sich der Ausstoß von fehlerhaften Behältern verhindern und die Produktivität Anlage wird gesteigert.

Durch die fluidische Entkopplung der Druckerzeugungseinrichtung vom Füllkopf über die Absperrvorrichtung kann die Druckhaltezeit, welche für die Formausprägung des Behälters entscheidend ist, von der Druckerzeugung entkoppelt werden. Dazu wird nach dem Einstellen des Haltedrucks die Absperrvorrichtung geschlossen. Durch die Entkopplung der Druckerzeugungseinrichtung vom Füllkopf ist es möglich, einzelne Prozessabläufe wie beispielsweise Bereitstellen eines Haltedrucks und Druckerzeugung für einen nächsten Zyklus, zu parallelisieren. Somit kann bei geschlossener Absperrvorrichtung ein Haltedruck im Behälter bereitgestellt werden und gleichzeitig ein Druck für einen nächsten Zyklus durch die Druckerzeugungseinrichtung aufgebaut werden.

Handelt es sich bei der Druckerzeugungseinrichtung beispielsweise um eine Kolbenvorrichtung, kann der Füllzylinder während der Druckhaltezeit gefüllt werden. Dies führt zu einer Verkürzung der Prozesszeit und steigert die Produktivität der Vorrichtung.

Mittels einer zum Beispiel doppelt wirkenden Arbeitsweise des Kolbens kann die Produktivität erhöht werden, da kein unproduktiver Rückhub stattfindet.

Des Weiteren kann durch den beispielsweise doppelt wirkenden Kolben eine weitere Formstation mit dem Füllmedium versorgt werden, wodurch die halbe Anzahl der Füllzylinder eingespart werden kann.

Ein weiterer Vorteil, welcher sich aus einer beispielsweise doppelt wirkenden Arbeitsweise des Kolbens ergeben kann, ist die Unterstützung des Kolbenantriebs im Füllzylinder durch den Vordruck einer Flüssigkeitspumpe, welche das Füllmedium zum Füllzylinder fördert. Dadurch ergeben sich Einsparungen hinsichtlich des Energieverbrauchs.

Bevorzugt weist die Druckerzeugungseinrichtung ein gegenüber einem Flüssigkeitsraum bewegbares Kolbenelement auf. Dieses Kolbenelement kann durch seine Bewegung bezüglich diesem Flüssigkeitsraum einerseits den Druck der Flüssigkeit erzeugen, der das Behältnis expandiert und andererseits gegenüber einem anderen Abschnitt des Aufnahmeraums einen Unterdruck erzeugen, der wiederum zum Absaugen von Flüssigkeit verwendet werden kann. Bevorzugt teilt das Kolbenelement den Flüssigkeitsraum in zwei Raumabschnitte.

Bei einer bevorzugten Ausführungsform ist in vertikaler Richtung, oberhalb eines höchsten Punktes, bezogen auf ein Höhenniveau eines Einströmbereichs eines Füllkopfs der Einfülleinrichtung, zumindest eine Entgasungsanlage fluidisch mittels eines Entlüftungskanals mit dem Einströmbereich verbunden, sodass über oder durch die Entgasungsanlage ein aus dem Kunststoffvorformling befindliches Gas während des Befüllens entweichen kann.

Gemäß zumindest einer Ausführungsform umfasst die Entgasungsanlage zumindest einen Sensor, welcher dazu eingerichtet und dafür vorgesehen ist, zwischen dem Gas oder dem Füllmedium zu unterscheiden, sodass mittels der Entgasungsanlage das Gas von dem Füllmedium trennbar ist.

Bei einer bevorzugten Ausführungsform weist die Vorrichtung einen bewegbaren Träger auf, an dem die Umformungsstationen angeordnet sind. Vorteilhaft handelt es sich bei diesem bewegbaren Träger um einen bezüglich einer Drehachse drehbaren Träger. Besonders bevorzugt sind an dem Träger mehrere Umformungsstationen angeordnet. So können beispielsweise zwischen 5 und 60 Umformungsstationen an diesem Träger angeordnet sein. Es wird darauf hingewiesen, dass die Umformungsstationen bevorzugt auch als Füllstationen dienen.

Bei einer weiteren bevorzugten Ausführungsform weist die Einfülleinrichtung eine Beaufschlagungseinrichtung auf, welche an einen Mündungsrand der Kunststoffvorformlinge anlegbar ist, um diese mit dem flüssigen Medium zu befüllen (und um diese insbesondere auch zu expandieren). Vorteilhaft liegt dabei diese Einfülleinrichtung dichtend an dem Mündungsrand des jeweiligen Kunststoffvorformlings an. Weiterhin kann die Einfülleinrichtung Ventileinrichtungen aufweisen, um die Zuführung des Produkts in die Kunststoffvorformlinge zu steuern. Dabei ist es auch möglich, dass während eines Expansionsvorgangs die Flüssigkeit mit unterschiedlichen Drücken und/oder unterschiedlichen Volumenströmen in die Kunststoffvorformlinge gefördert wird.

Bei einer bevorzugten Ausführungsform weisen die einzelnen Umformungsstationen auch Umformungsformen auf, innerhalb derer die Kunststoffvorformlinge durch Beaufschlagung mit dem flüssigen Medium expandiert werden. Diese Umformungsformen können dabei geöffnet und geschlossen werden, wobei in einem geschlossenen Vorgang die Expansion der Kunststoffvorformlinge möglich ist. Dabei ist es möglich, dass diese Umformungsformen Formteile aufweisen, die bezüglich einander schwenkbar sind und insbesondere einander bezüglich einer Achse schwenkbar sind. Diese Achse verläuft beispielsweise parallel zur Längsrichtung des Kunststoffvorformlings.

Bei einer weiteren vorteilhaften Ausführungsform weist die Vorrichtung eine Aufnahmeeinrichtung auf, für ein aus dem Behältnis entnommenes flüssiges Medium. Dabei kann es sich um ein zusätzliches Reservoir handeln, innerhalb welches ein abgesaugtes Medium zwischengespeichert werden kann. Zusätzlich oder alternativ zu dem Reservoir kann die Flüssigkeit jedoch auch in Leitungsabschnitten gespeichert werden.

Damit ist es möglich, dass die Flüssigkeit bei Bedarf in einem Tank gespeichert wird. Bei einem dichten Behältnis kann auch hier ein Kollabieren des Behältnisses eingeleitet werden oder aber bei einem belüfteten Behältnis die gewünschte Füllgutmenge abgesaugt werden. Die Füllgutmenge, welche sich dann in einem Sammelbehälter sammelt, kann beispielsweise mittels eines Ventils oder eines Ausgangs entweder einem Produktkessel, beispielsweise einer Sammeleinrichtung für das Produkt, zugeführt, oder auch anderweitig verwendet werden.

Bei einer weiteren vorteilhaften Ausführungsform weist die Vorrichtung einen stangenartigen Körper zum Dehnen der Behältnisse auf, wobei dieser stangenartige Körper bevorzugt einen Kanal zum Leiten des flüssigen Mediums aufweist.

Auf diese Weise kann eine hohle Reckstange verwendet werden, durch die insbesondere auch das flüssige Medium oder insbesondere das Produkt geleitet werden kann. Alternativ kann die Reckstange auch "nicht" hohl ausgebildet sein.

Bei einer weiteren vorteilhaften Ausführungsform weist die Vorrichtung ein weiteres Aufnahmebehältnis zur Aufnahme des flüssigen Mediums auf. Dieses weitere Aufnahmebehältnis ist vorteilhaft unterhalb des zu expandierenden Kunststoffbehältnisses angeordnet. Über dieses weitere Aufnahmebehältnis kann insbesondere auch ein Siphoneffekt zum Absaugen von Flüssigkeit aus dem Behältnis genutzt werden.

Bei einer weiteren vorteilhaften Ausgestaltung steht dieses weitere Aufnahmebehältnis wenigstens zeitweise in Strömungsverbindung mit dem zu expandierenden Behältnis und/oder mit einem weiteren, in einer anderen Umformungsstation zu expandierenden, Behältnis.

Bei einer weiteren vorteilhaften Ausführungsform weist die Vorrichtung eine Pumpeneinrichtung auf, welche als Druckerzeugungseinrichtung dient.

Bevorzugt ist ein Zulauf zu der Druckbeaufschlagungseinrichtung vorgesehen, über den insbesondere die abzufüllende Flüssigkeit der Druckbeaufschlagungseinrichtung zugeführt wird. Bevorzugt weist dieser Zulauf eine Ventileinrichtung auf, um die Zufuhr von Flüssigkeit an die Druckbeaufschlagungseinrichtung zu steuern. Dieses Ventil kann geschlossen werden, um den Einfüllvorgang der Flüssigkeit in das Behältnis zu ermöglichen.

Die vorliegende Erfindung ist weiterhin auf ein Verfahren zum Expandieren von Kunststoffvorformlingen zu Kunststoffbehältnissen mittels eines flüssigen Mediums und insbesondere mittels eines Füllprodukts gerichtet, welche wenigstens eine Umformungsstationen aufweist, welche die Kunststoffvorformlinge mit dem flüssigen Medium befüllen und expandieren. Dabei ist wenigstens eine Druckerzeugungseinrichtung vorgesehen, welche das flüssige Medium mittels einer Einfülleinrichtung zuführt, die dann die Kunststoffvorformlinge mit dem flüssigen Medium befüllt. Dabei weist die Druckerzeugungseinrichtung einen Druckausgang auf, der wenigstens zeitweise in Strömungsverbindung mit dem zu befüllenden Kunststoffvorformling steht.

Erfindungsgemäß ist in zumindest einem Verbindungskanal zwischen der Druckerzeugungseinrichtung und der Einfüllrichtung, innerhalb welchem das flüssige Medium geleitet wird, zumindest eine Absperreinrichtung eingebaut, wobei die Absperreinrichtung einen Fluidweg innerhalb des Verbindungkanals zumindest teilweise unterbricht, sodass die Einfülleinrichtung und/oder die Druckerzeugungseinrichtung entgast werden können.

Gemäß zumindest einer Ausführungsform ist durch eine Bewegung der Reckstange zur Expansion des Kunststoffvorformlings ein Behälterinnendruck innerhalb des Kunststoffvorformlings auf- und/oder abbaubar ist. Dabei kann die Reckstange einen entlang Ihrer Längsrichtung zumindest teilweise durchgehenden Kanal aufweisen, durch welchen hindurch ein Fluid abführbar oder in den Kunststoffvorformling zuführbar ist.

Mit anderen Worten kann durch ein Verfahren der Reckstange Druck im eingeschlossenen Zustand (Zwischenventil und Recircventil geschlossen) insbesondere auch im Kunststoffbehältnis abgebaut werden, um die Strömungsgeschwindigkeit in Richtung Recirc zu senken und den Einfluss der Schaltzeiten zu reduzieren. Durch eine damit einhergehende Volumenreduzierung bei der Rückbewegung der Reckstange innerhalb des Kunstvorformlings und/oder innerhalb des Kunststoffbehältnisses wird der Druck reduziert. Das Recircventil dient dazu, dass Produkt wieder aus dem Formkopf auszuleiten. Somit kann beispielsweise die Füllhöhe im Behälter eingestellt werden. Auch ist es möglich den Formkopf zu spülen.

Denkbar ist zudem, dass über eine solche Positions- oder Druckregelung zumindest ein, bevorzugt zumindest zwei, Haltedrücke einstellbar sind.

Gemäß zumindest einer Ausführungsform sind die Einfülleinrichtung und/oder die Druckerzeugungseinrichtung entgasbar und/oder es sind Prozesszeiten der Einfülleinrichtung und der Druckerzeugungseinrichtung parallelisierbar sind. Dies kann eine Synchronisation der beiden Einrichtungen im Hinblick auf deren Prozesszeiten bedeuten.

Zum Beispiel ist ein hier vorgeschlagenes Verfahren mittels einer wie obig beschriebenen Vorrichtung durchführbar.

Weitere Vorteile und Ausführungsformen ergeben sich aus den beigefügten Zeichnungen.

Darin zeigen:
- Fig. 1: eine schematische Darstellung einer erfindungsgemäßen Vorrichtung;
- Fig. 2: eine Detaildarstellung einer zur Figur 1 abgewandelten und erfindungsgemäßen Vorrichtung.

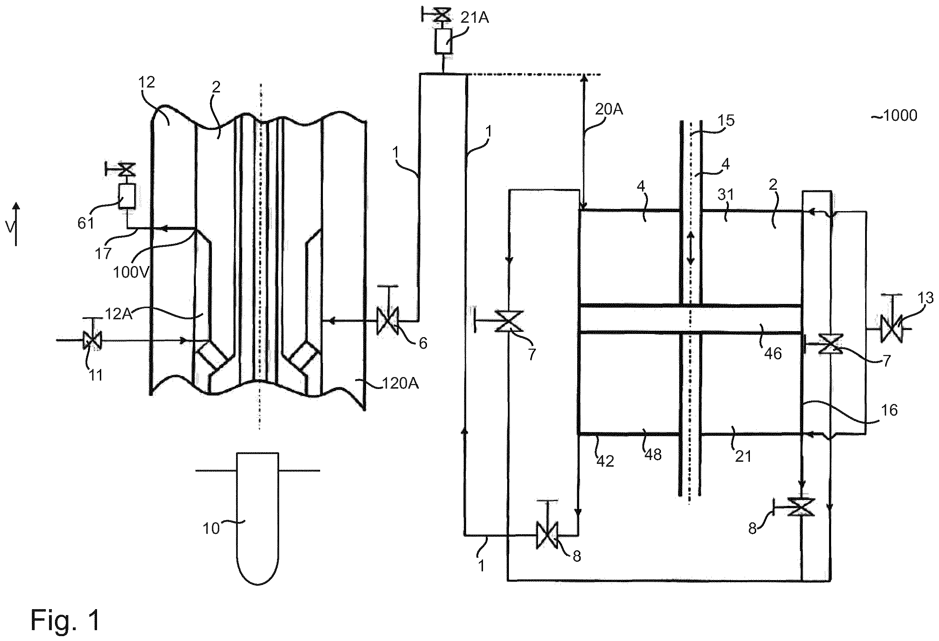

Figur 1 zeigt eine schematische Darstellung einer erfindungsgemäßen Vorrichtung 1000 zum Expandieren von Kunststoffvorformlingen zu Kunststoffbehältnissen 10 mittels eines flüssigen Mediums mit wenigstens einer Umformungsstation 2, welche die Kunststoffvorformlinge mit dem flüssigen Medium befüllt und expandiert, mit wenigstens einer Druckerzeugungseinrichtung 4, welche dazu geeignet und bestimmt ist, das flüssige Medium wenigstens einer Einfülleinrichtung 12 zuzuführen, welche die Kunststoffvorformlinge mit dem flüssigen Medium befüllt, wobei die Druckerzeugungseinrichtung 4 einen Druckausgang 42 aufweist, der wenigstens zeitweise in Strömungsverbindung mit dem zu befüllenden Kunststoffvorformling bringbar ist.

In einem Verbindungskanal 1, zwischen der Druckerzeugungseinrichtung 4 und der Einfüllrichtung 12, innerhalb welchem das flüssige Medium geleitet wird, ist eine Absperreinrichtung 6 eingebaut ist, wobei die Absperreinrichtung 6 dazu eingerichtet und dafür vorgesehen ist, dass ein Fluidweg innerhalb des Verbindungkanals 1 zumindest teilweise unterbrechbar ist, insbesondere sodass die Einfülleinrichtung 12 und/oder die Druckerzeugungseinrichtung 4 entgasbar sind.

Die Druckerzeugungseinrichtung 4 weist einen Kolben 46 auf, der gegenüber einem Flüssigkeitsraum 48 in vertikale Richtung V bewegbar ist, um so über einen Druckausgang 42 die Flüssigkeit über den Verbindungskanal 1 zu einer in ihrer Gesamtheit mit 12 bezeichneten Einfülleinrichtung zu fördern. Ausgehend von der Einfülleinrichtung 12 gelangt die Flüssigkeit in das Behältnis 10. Die Einfülleinrichtung 12 dient bevorzugt gleichzeitig als Druckbeaufschlagungseinrichtung, um die Kunststoffvorformlinge mit einem Druck zu beaufschlagen, um diese zu expandieren. Dabei ist jedoch vorzugsweise die Druckerzeugungseinrichtung 4 von einer Druckbeaufschlagungseinrichtung verschieden, da eine Druckbeaufschlagungseinrichtung ein anderes Element, zum Beispiel einen Preform, lediglich mit einem Druck beaufschlagt, diesen jedoch nicht, zumindest nicht maßgeblich, erzeugt.

In vertikaler Richtung V, oberhalb einer höchsten Punktes 100V bezogen auf ein Höhenniveau eines Einströmbereichs 12A eines Füllkopfs 120Ader Einfülleinrichtung 12, ist zumindest eine Entgasungsanlage 61 fluidisch mittels eines Entlüftungskanals 17 mit dem Einströmbereich 12A verbunden, sodass über oder durch die Entgasungsanlage 61 ein aus dem Kunststoffvorformling während des Befüllens befindliches Gas entweichen kann.

Bei der vorliegenden Erfindung und in der Figur 1 gezeigten beispielhaften Vorrichtung 1000 handelt es sich unter anderem um eine Kombination aus einem Füllkopf 120A und einem Füllzylinder 16, wobei beide Komponenten unabhängig voneinander entgast werden können.

Der Füllzylinder 16 ist über die Versorgungsleitung mit einem Versorgungsbehälter, in welchem das flüssige Medium gespeichert ist, verbunden.

Ein Kolben 46, welcher innerhalb des Füllzylinders 16 verfahrbar ist kann entweder einfachwirkend oder doppeltwirkend ausgeführt sein. Der Kolben 46 ist gegen ein Zylindergehäuse des Füllzylinders 16 abgedichtet und bewegt sich entlang einer Zylinderachse 15. Wird durch die Kolbenbewegung eine der Zylinderkammern 21 oder 31 verkleinert, so wird Flüssigkeit aus dieser Kammer in den Füllkopfs 120A gedrückt.

Je nach Bewegungsrichtung werden entweder Absperrvorrichtungen 7 oder 8 geschlossen, sodass eine Fluidbewegung von einer Zylinderkammer zur anderen unterbrochen wird.

Im Verbindungskanal 1, welcher den Füllzylinder 16 mit dem Füllkopf 120A verbindet, ist die steuerbare Absperreinrichtung 6 installiert, welche den Fluidfluss zwischen Füllzylinder 16 und Füllkopf 120A unterbrechen kann.

Die Verbindung wird dabei in vorliegendem Ausführungsbeispiel nach dem einstufigen Druckaufbau durch die Kolbenbewegung unterbrochen und so der Druck im Füllkopf 120A konstant gehalten. Der Füllkopf 120A und der Füllzylinder 16 sind nun voneinander entkoppelt.

Wie bereits obig angesprochen ist an der höchsten Stelle des Einströmbereichs 12A im Füllkopf 120A der Entlüftungskanal 17 angeordnet, welcher in der vertikalen Richtung V abzweigt, sodass das vorhandene Gas weiter nach oben steigt und abschließend zu der Entgasungsanlage 61 geführt wird, in welcher Gas vom Füllmedium mithilfe eines Sensors oder einer mechanischen Vorrichtung unterschieden und vom Füllmedium getrennt wird.

Nach dem Formen eines Behälters befindet sich das Gasvolumen aus dem Preform des vorherigen Zyklus im Füllkopf 120A. Der Füllkopf 120A kann durch die Verbindung mit einem Speicherbehälter über den Verbindungskanal 1 und das Ventil 11 bei geöffneter Absperreinrichtung 6 unabhängig vom Füllzylinder 16 gefüllt werden. Das Ventil 11 kann ein Spülventil sein. Der Verbindungskanal 1 ist vorzugsweise auf einem niedrigeren vertikalen Niveau als der Entlüftungskanal 17.

Beim Füllen des Füllkopfs 120A mit der unter Druck stehenden Flüssigkeit wird das Gas durch den Entlüftungskanal 17 in die Entgasungsanlage 61 gedrückt und der Umgebung zugeführt, sodass sich nach diesem Vorgang keine Gasrückstände im Füllkopf 120A befinden.

Das Gasvolumen, welches sich zu Beginn des Prozesses im Füllzylinder 16 befindet, wird über die Entgasungsanlage 61 abgeführt. Die Entgasungsanlage 61 weist, vorzugsweise immer, einen vertikalen Abstand 20A von größer Null gegenüber dem höchsten Punkt des Füllzylinders 16 und/oder gegenüber dem Einströmbereich 12 auf.

Das Bezugszeichen 21A ist ein Schnellentlüftungsventil, mittels welchem verhindert werden kann, dass Luft in die Druckerzeugungseinrichtung 4 strömt. Mit dem Bezugszeichen 13 ist eine Absperreinrichtung bezeichnet, mit der der Zufluss des flüssigen Mediums aus einem Produkttank (nicht dargestellt) gesteuert werden kann

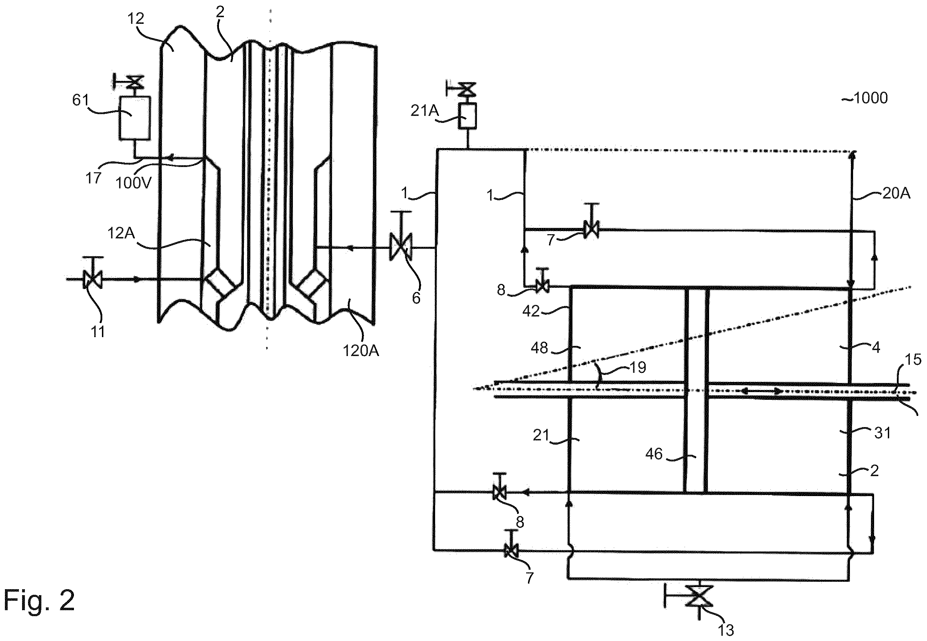

In der Figur 2 ist im Unterschied zur Figur 1 dargestellt, dass die Kolbenachse 15 in einem Winkel 19 zu einer horizontalen Ebene angeordnet wird, wobei der Winkel 19 kleiner oder gleich 90 Grad ist. Dabei kann das flüssige Medium nachgefördert durch eine nicht eingezeichnete Kammer nachgefördert werden, um Luftvolumen welches nach außen geht durch das flüssige Medium zu ersetzen. Alternativ oder zusätzlich könnte auch eine Reckstange die Druckregelung übernehmen und tiefer in Kunststoffbehältnis einfahren, wenn durch die Entlüftung der Druck absinkt

### Bezugszeichenliste

- 1: Verbindungskanal
- 2: Umformungsstation
- 4: Druckerzeugungseinrichtung
- 6: Absperreinrichtung
- 7: Absperrvorrichtung
- 8: Absperrvorrichtung
- 10: Kunststoffbehältnis
- 11: Ventil
- 12: Einfülleinrichtung
- 12A: Einströmbereich
- 13: Absperreinrichtung
- 15: Zylinderachse/ Kolbenachse
- 16: Füllzylinder
- 17: Entlüftungskanal
- 20A: vertikaler Abstand
- 21: Zylinderkammer
- 21A: Schnellentlüftungsventil
- 31: Zylinderkammer
- 42: Druckausgang
- 46: Kolben
- 48: Flüssigkeitsraum
- 61: Entgasungsanlage
- 100V: höchster Punkt
- 120A: Füllkopf
- 1000: Vorrichtung
- V: vertikale Richtung

## Patentansprüche

1. Vorrichtung (1000) zum Expandieren von Kunststoffvorformlingen zu Kunststoffbehältnissen (10) mittels eines flüssigen Mediums mit wenigstens einer Umformungsstation (2), welche die Kunststoffvorformlinge mit dem flüssigen Medium befüllt und expandiert mit wenigstens einer Druckerzeugungseinrichtung (4), welche dazu geeignet und bestimmt ist, das flüssige Medium wenigstens einer Einfülleinrichtung (12) zuzuführen, welche die Kunststoffvorformlinge mit dem flüssigen Medium befüllt, wobei die Druckerzeugungseinrichtung (4) einen Druckausgang (42) aufweist, der wenigstens zeitweise in Strömungsverbindung mit dem zu befüllenden Kunststoffvorformling bringbar ist, wobei
- in zumindest einem Verbindungskanal (1) zwischen der Druckerzeugungseinrichtung (4) und der Einfüllrichtung (12), innerhalb welchem das flüssige Medium geleitet wird, zumindest eine Absperreinrichtung (6) eingebaut ist, wobei die Absperreinrichtung (6) dazu eingerichtet und dafür vorgesehen ist, dass ein Fluidweg innerhalb des Verbindungskanals (1) zumindest teilweise unterbrechbar ist, **dadurch gekennzeichnet dass** die Einfülleinrichtung und/oder die Druckerzeugungseinrichtung unabhängig voneinander entgasbar sind.

2. Vorrichtung (1000) nach Anspruch 1,
**dadurch gekennzeichnet, dass**
in vertikaler Richtung (V) oberhalb eines höchsten Punktes (100V) bezogen auf ein Höhenniveau eines Einströmbereichs (12A) eines Füllkopfs (120A) der Einfülleinrichtung (12) zumindest eine Entgasungsanlage (61) fluidisch mittels eines Entlüftungskanals (17) mit dem Einströmbereich (12A) verbunden ist, sodass über oder durch die Entgasungsanlage (61) ein aus dem Kunststoffvorformling während des Befüllens befindliches Gas entweichen kann.

3. Vorrichtung (1000) nach Anspruch 2,
**dadurch gekennzeichnet, dass**
die Entgasungsanlage (61) zumindest einen Sensor umfasst, welcher dazu eingerichtet und dafür vorgesehen ist, zwischen dem Gas oder dem Füllmedium zu unterscheiden, sodass mittels der Entgasungsanlage (61) das Gas von dem Füllmedium trennbar ist.

4. Vorrichtung (1000) nach zumindest einem der vorhergehenden Ansprüche,
**dadurch gekennzeichnet, dass**
die Druckerzeugungseinrichtung (4) ein gegenüber einem Flüssigkeitsraum (48) bewegbares Kolbenelement (46) aufweist.

5. Vorrichtung (1000) nach wenigstens einem der vorangegangenen Ansprüche,
**dadurch gekennzeichnet, dass**
die Vorrichtung einen bewegbaren Träger aufweist, an dem die Umformungsstationen (2) angeordnet sind.

6. Vorrichtung (1000) nach wenigstens einem der vorangegangenen Ansprüche 2 bis 5,
**dadurch gekennzeichnet, dass**
der Verbindungskanal (1) auf einem niedrigeren vertikalen Höhenniveau als der Entlüftungskanal (17) angeordnet ist, sodass beim Befüllen des Füllkopfs (120A) mit einem Druck das Gas durch den Entlüftungskanal (17) in die Entgasungsanlage (61) gedrückt und der Umgebung zuführbar ist, sodass sich nach diesem Vorgang im Wesentlichen keine Gasrückstände im Füllkopf (120A) mehr befinden.

7. Vorrichtung (1000) nach wenigstens einem der vorangegangenen Ansprüche 2 bis 6,
**dadurch gekennzeichnet, dass**
eine Kolbenachse des Kolbenelements (46) in einem von Null abweichenden Winkel (19) zur vertikalen Richtung (V) ausgerichtet ist.

8. Vorrichtung (1000) nach wenigstens einem der vorangegangenen Ansprüche,
**dadurch gekennzeichnet, dass**
die Vorrichtung (1000) eine Schließeinrichtung aufweist, um einen Strömungsweg des flüssigen Mediums aus dem Behältnis zu verschließen.

9. Vorrichtung (1000) nach wenigstens einem der vorangegangenen Ansprüche,
**dadurch gekennzeichnet, dass**
die Druckbeaufschlagungseinrichtung (4) eine Pumpeneinrichtung ist.

10. Vorrichtung (1000) nach wenigstens einem der vorangegangenen Ansprüche,
**dadurch gekennzeichnet, dass**
das durch eine Bewegung einer Reckstange zur Expansion des Kunststoffvorformlings ein Behälterinnendruck innerhalb des Kunststoffvorformlings auf- und/oder abbaubar ist.

11. Vorrichtung (1000) nach wenigstens einem der vorangegangenen Ansprüche,
**dadurch gekennzeichnet, dass**
die Einfülleinrichtung (12) und/oder die Druckerzeugungseinrichtung (4) entgasbar sind und/oder Prozesszeiten der Einfülleinrichtung (12) und der Druckerzeugungseinrichtung (4) parallelisierbar sind.

12. Verfahren zum Expandieren von Kunststoffvorformlingen zu Kunststoffbehältnissen (10) mittels einer Vorrichtung (1000) nach Anspruch 1,
**dadurch gekennzeichnet, dass**
in zumindest einem Verbindungskanal (1) zwischen der Druckerzeugungseinrichtung (4) und der Einfüllrichtung (12), innerhalb welchem das flüssige Medium geleitet wird, zumindest eine Absperreinrichtung (6) eingebaut ist, die einen Fluidweg innerhalb des Verbindungkanals (1) zumindest teilweise in zumindest einem Betriebsmodus unterbricht.

## Claims

1. Machine (1000) for expanding plastic parisons into plastic containers (10) by means of a liquid medium, having at least one transforming station (2), which fills and expands the plastic parisons with the liquid medium with at least one pressure generating device (4), which is suitable and intended to deliver the liquid medium to at least one filling device (12), which fills the plastic parisons with the liquid medium, wherein the pressure generating device (4) has a pressure output (42) which at least intermittently can be fluidically connected to the plastic parison to be filled,
wherein
at least one shut-off device (6) is installed in at least one connection channel (1), between the pressure generating device (4) and the filling device (12) inside which the liquid medium is conveyed, wherein the shut-off device (6) is configured and provided in order that a fluid path inside the connection channel (1) can be at least partially interrupted, **characterised in that**
the filling device and/or the pressure generating device are able to be degassed independently of one another.

2. Machine (1000) according to claim 1,
**characterised in that**
in a vertical direction (V) above the highest point (100V) relative to the height of an inflow region (12A) of a filling head (120A) of the filling device (12), at least one degassing apparatus (61) is fluidically connected by means of a venting channel (17) to the inflow region (12A), so that by means of or due to the degassing apparatus (61) a gas from the plastic parison can escape during the filling.

3. Machine (1000) according to claim 2,
**characterised in that**
the degassing apparatus (61) comprises at least one sensor which is configured and provided in order to distinguish between the gas or the filling medium, so that by means of the degassing apparatus (61) the gas can be separated from the filling medium.

4. Machine (1000) according to at least one of the preceding claims,
**characterised in that**
the pressure generating device (4) has a piston element (46) which is movable relative to a liquid chamber (48).

5. Machine (1000) according to at least one of the preceding claims,
**characterised in that**
the machine has a movable carrier on which the transforming stations (2) are arranged.

6. Machine (1000) according to at least one of the preceding claims 2 to 5,
**characterised in that**
the connection channel (1) is arranged at a lower vertical height than the venting channel (17), so that during filling of the filling head (120A) under pressure, the gas is forced through the venting channel (17) into the degassing apparatus (61) and can be delivered to the environment, so that after this operation there are substantially no longer any gas residues in the filling head (120A).

7. Machine (1000) according to at least one of the preceding claims 2 to 6,
**characterised in that**
a piston axis of the piston element (46) is oriented at an angle (19) deviating from zero with respect to the vertical direction (V).

8. Machine (1000) according to at least one of the preceding claims,
**characterised in that**
the machine (1000) has a closing device in order to close a flow path of the liquid medium from the container.

9. Machine (1000) according to at least one of the preceding claims,
**characterised in that**
the pressure generating device (4) is a pumping device.

10. Machine (1000) according to at least one of the preceding claims,
**characterised in that**
the internal container pressure inside the plastic parison can be increased and/or decreased by a movement of the stretching rod for expansion of the plastic parison.

11. Machine (1000) according to at least one of the preceding claims,
**characterised in that**
the filling device (12) and/or the pressure generating device (4) can be degassed and/or process times of the filling device (12) and the pressure generating device (4) can be parallelised.

12. Method of expanding plastic parisons into plastic containers (10) by means of a machine (1000) according to claim 1,
**characterised in that**
at least one shut-off device (6) is installed in at least one connection channel (1), between the pressure generating device (4) and the filling device (12) inside which the liquid medium is conveyed, which shut-off device at least partially interrupts a fluid path inside the connection channel (1) in at least one mode of operation.

## Revendications

1. Dispositif (1000) destiné à dilater des préformes en plastique, pour en faire des récipients en plastique (10) au moyen d'un milieu fluide avec au moins une station de formage (2), qui remplit et dilate les préformes en plastique avec le milieu fluide, avec au moins un équipement générateur de pression (4) qui est adapté et déterminé pour alimenter en milieu fluide au moins un équipement de remplissage (12), remplissant les préformes en plastique avec le milieu fluide, dans lequel l'équipement générateur de pression (4), présente une sortie de pression (42) qui peut être amenée au moins temporairement en liaison fluidique avec la préforme en plastique à remplir,
dans lequel
au moins un équipement d'obturation (6) est disposé dans au moins un canal de liaison (1) entre l'équipement générateur de pression (4) et l'équipement de remplissage (12), à l'intérieur duquel le milieu fluide est guidé, dans lequel l'équipement d'obturation (6) est conçu et prévu pour qu'un trajet de fluide à l'intérieur du canal de liaison (1) puisse être au moins partiellement interrompu,
**caractérisé en ce que**
l'équipement de remplissage et/ou l'équipement générateur de pression peuvent être dégazés indépendamment l'un de l'autre.

2. Dispositif (1000) selon la revendication 1,
**caractérisé en ce que**
dans la direction verticale (V) au-dessus d'un point le plus élevé (100V) par rapport à un niveau en hauteur d'une zone d'afflux (12A) d'une tête de remplissage (120A) de l'équipement de remplissage (12), au moins une installation de dégazage (61), est fluidiquement reliée à la zone d'afflux (12A) au moyen d'un canal de purge (17), de sorte qu'un gaz présent dans la préforme en plastique pendant le remplissage puisse s'échapper via ou à travers l'installation de dégazage (61).

3. Dispositif (1000) selon la revendication 2,
**caractérisé en ce que**
l'installation de dégazage (61) comprend au moins un capteur qui est conçu et prévu pour différencier le gaz et le milieu fluide, de sorte que le gaz puisse être séparé du milieu fluide au moyen de l'installation de dégazage (61).

4. Dispositif (1000) selon au moins l'une des revendications précédentes,
**caractérisé en ce que**
l'équipement générateur de pression (4) présente un élément de piston (46) mobile, par rapport à une chambre à fluide (48).

5. Dispositif (1000) selon au moins l'une des revendications précédentes,
**caractérisé en ce que**
le dispositif présente un support mobile sur lequel sont agencées les stations de formage (2).

6. Dispositif (1000) selon au moins l'une des revendications précédentes 2 à 5,
**caractérisé en ce que**
le canal de liaison (1) est agencé sur un niveau en hauteur verticale inférieur à celui du canal de purge (17), de sorte que lors du remplissage de la tête de remplissage (120A) avec une pression, le gaz puisse être poussé via le canal de purge (17), jusque dans l'installation de dégazage (61) et amené à l'environnement, de sorte qu'après ce processus, essentiellement plus aucun résidu de gaz, ne se trouve dans la tête de remplissage (120A).

7. Dispositif (1000) selon au moins l'une des revendications précédentes 2 à 6,
**caractérisé en ce que**
un axe de piston de l'élément de piston (46) est orienté selon un angle (19) différent de zéro par rapport à la direction verticale (V).

8. Dispositif (1000) selon au moins l'une des revendications précédentes,
**caractérisé en ce que**
le dispositif (1000) présente un équipement de fermeture pour fermer un trajet d'écoulement du milieu fluide hors du récipient.

9. Dispositif (1000) selon au moins l'une des revendications précédentes,
**caractérisé en ce que**
l'équipement générateur de pression (4) est un dispositif de pompage.

10. Dispositif (1000) selon au moins l'une des revendications précédentes,
**caractérisé en ce que**
une pression interne du récipient à l'intérieur de la préforme en plastique, peut être augmentée et/ou réduite par un mouvement d'une tige d'étirage pour dilater la préforme en plastique.

11. Dispositif (1000) selon au moins l'une des revendications précédentes,
**caractérisé en ce que**
l'équipement de remplissage (12) et/ou l'équipement générateur de pression (4) peuvent être dégazés et/ou des temps de processus de l'équipement de remplissage (12) et de l'équipement générateur de pression (4) peuvent être parallélisés.

12. Procédé d'expansion de préformes en plastique pour en faire des récipients en plastique (10) au moyen d'un dispositif (1000) selon la revendication 1,
**caractérisé en ce que**
dans au moins un canal de liaison (1) entre l'équipement générateur de pression (4) et l'équipement de remplissage (12), à l'intérieur duquel le milieu fluide est guidé, au moins un équipement d'obturation (6) est disposé pour interrompre au moins partiellement un trajet de fluide à l'intérieur du canal de liaison (1), dans au moins un mode de fonctionnement.
